# EUROPEAN PATENT APPLICATION

(11) **EP 4 145 235 A1**
(43) Date of publication of application: **08.03.2023**
(21) Application number: 21195218.9
(22) Date of filing: 07.09.2021
(51) Int. Cl.: G05B 23/02, G06F 16/901, G06N 5/02

(54) **APPARATUS AND METHOD FOR RULE-BASED PREDICTIVE MAINTENANCE OF A PHYSICAL SYSTEM**

(71) Applicant: Siemens Aktiengesellschaft, 80333 München (DE)
(72) Inventor: Hildebrandt, Marcel, 80634 München (DE); Joblin, Mitchell, 81825 München (DE); Liu, Yushan, 81737 München (DE); Ma, Yunpu, 81379 München (DE)
(74) Representative: Siemens Patent Attorneys

(57) **Abstract**

The invention relates to an apparatus and a method for rule-based predictive maintenance of a physical system. Random walks are performed within a knowledge graph, and the results of the random walks are generalized to rules, the confidence or validity of which are then evaluated. In this way, human-interpretable and reliable rules can be automatically generated and optionally also applied.

## Description

### Field of the Invention

The present invention relates to an apparatus and a method for rule-based predictive maintenance of a physical system, as well as to a related computer program product, data storage medium and data stream. The physical system may be any system comprising tangible, physical entities such as machines, machine components or parts, sites, buildings, infrastructure, materials and the like. In particular, the invention relates to predictive maintenance of a physical system including at least one electric and/or mechanical machine in a production plant.

### Background of the Invention

The smooth operation of machines during production is essential for the efficiency in any production plant. In case machine failures cannot be detected in time, the production process could be interrupted by unplanned downtimes, which decreases production efficiency and leads to increased costs. Typically, maintenance schedules that neglect the individual machine's condition are defined in a conservative manner such that parts are often replaced before their full usage lifetime is consumed, which leads to unnecessarily high costs. Forecasting machine failures and preventing potential problems are part of so-called "predictive maintenance", which determines maintenance measures based on the actual condition of the machines.

Given historical information about equipment, maintenance events, and the production plant, data analysis tools (e.g., based on machine learning methods) have been developed to predict anomalies such as unexpected machine failures. Depending on the properties and current condition of a machine, maintenance measures can be carried out if the machine is expected to break down.

The predictions and measures might not only depend on the current condition of the machine, but also on historical and contextual data. For example, previous maintenance operations might have an influence of the subsequent repair steps, or depending on if the machine has salt exposure or not, the prevention strategies might be different. One strategy of storing this information employs a knowledge graph wherein the entities (nodes) in the knowledge graph may correspond to equipment or maintenance events. The relationships between the entities are expressed via directed edges. Further, each link in the graph is associated with a timestamp, stating the validity of the link at the given timestamp. Static background information is valid at all timestamps.

Subsymbolic machine learning methods, e.g., deep learning algorithms, which are also scalable to large datasets, have achieved some success for prediction tasks on knowledge graphs. However, the black-box property makes it difficult for human operators to understand and trust the predictions. To make the algorithms more transparent and trustworthy, human-understandable explanations are necessary. With the explanations, a domain expert can better evaluate the predictions, assess the situation correctly, and decide on the best measures.

### Summary of the present invention

It is one of the objectives of the present invention to solve the above-described problems of enabling reliable yet human-understandable predictive maintenance.

This objective is fulfilled by the subject matter of the independent claims.

Accordingly, according to a first aspect, an apparatus for rule-based predictive maintenance of a physical system is provided. The apparatus comprises a knowledge graph module, KGM, configured to implement a knowledge graph including a plurality of nodes representing entities and a plurality of directed edges between at least a first subset of the nodes. Each edge represents a relationship between nodes connected by said edge of the type subject-relation-object. Each of the edges is either provided with a timestamp indicating a time at which the relationship represented by said edge was determined to be true, or it represents a static relationship.

Edges representing a static relationship may be considered to represent relationships that are true for all time stamps. Such "static edges" may be defined by 3-tupels of the type (s, r, t), "s" is the subject, "r" is the relation (or: type of relationship), and "o" is the object. Edges representing temporal (or: non-static, or: dynamic, or: changeable) relationships may be depicted as a 4-tuple of the type (s, r, o, t), wherein "s" is the subject, "r" relation (or: type of relationship), "o" is the object and "t" is the timestamp. The 3-tupels can be formally transformed into 4-tupels by concatenating "always" as a timestamp. Thus, a static edge may be given by (s, r, t, always).

The apparatus further comprises a random walk generating module, RWGM, configured to:
- starting with a starting edge comprising a relation for which a rule is sought, perform a number of cyclical temporal random nearest neighbor node walks, CTRNNW, such that the object of the last edge in the CTRNNW is the same as the subject of the starting edge, SE, and such that each subsequent edge in the CTRNNW after the starting edge, SE, either represents a static relationship or has a timestamp that is earlier than all of the timestamps of the preceding edges which do not represent a static relationship.

Here and in the following, for some (especially longer) terms abbreviations (such as "RWGM" for "random walk generating module") are used. Usually, the terms will be given followed by the corresponding abbreviations. In some cases, to improve legibility, only the abbreviation will be used, whereas in other cases only the term itself will be used.

It shall be understood that the starting edge, SE is not necessarily relevant on its own but essentially as a vehicle (or tool) for finding a rule for the relation comprised in the starting edge, SE. Thus, in order to find a rule for a particular relation, at least one edge with that relation is selected as a "starting edge", preferably more than one, more preferably all of them. Typical relations in the field of predictive maintenance include "hasDefect", "needsResupply-With", or the like. Thus, in order to find at least one rule for entities to have the relation "hasDefect", the steps described herein for one starting edge, SE, may be performed for each edge with the relation "hasDefect" as a starting edge. Depending on the configuration of the knowledge graph, one, several, each, or none of the starting edges may yield a rule for the relation.

Each relation is invertible, comparable to the options to express a subject-relation-object-time statement either in the active voice ("subject s has relation r with object o at time t") or in the passive voice ("relation r is being had by object o with subject s"). This means that, for the purpose of the cyclical temporal random nearest neighbor node walk, CTRNNW, edges can be followed in both directions. Formally: (s, r, o, t)⁻¹=(o, r⁻¹, s, t), with "⁻¹" in superscript always denoting the inversion operation.

The apparatus further comprises a rule generating module, RGM, configured to generate at least one rule for the relation of the starting edge, SE, by generating, for each CTRNNW, a rule head based on the starting edge, SE, of the CTRNNW and a rule body based on the remaining edges of the CTRNNW, wherein in both rule head and rule body entities (i.e. subjects and objects) and timestamps are replaced by entity placeholders and timestamp placeholders according to a predefined scheme, respectively.

Although here, in the foregoing and in the following, some functions are described as being performed by modules, it shall be understood that this does not necessarily mean that such modules are provided as entities separate from one another. In cases where one or more modules are provided as software, the modules may be implemented by program code sections or program code snippets which may be distinct from one another but which may also be interwoven.

Similarly, in case where one or more modules are provided as hardware, the functions of one or more modules may be provided by one and the same hardware component, or the functions of several modules may be distributed over several hardware components which need not necessarily correspond to the modules. Thus, any apparatus, system, method and so on which exhibits all of the features and functions ascribed to a specific module shall be understood to comprise, or implement, said module.

In particular, it is a possibility that all modules are implemented by program code executed by a computing device, e.g. a server or a cloud computing platform.

The apparatus further comprises a rule confidence evaluating module, RCEM, configured to determine for each rule generated by the rule generating module, RGM, a rule confidence value, RCV.

The apparatus further comprises an output module configured to output at least a part of the generated rules, preferably together with their respective rule confidence value, RCV.

The physical system may be any system comprising tangible, physical entities such as machines, machine components or parts, sites, buildings, infrastructure, materials and the like. In particular the invention relates to predictive maintenance of a physical system including at least one electric and/or mechanical machine or piece of equipment in a production plant.

The knowledge graph comprising edges with time stamps may be designated as a temporal knowledge graph which comprises static background knowledge (edges representing static relationships) and temporal background knowledge (edges comprising timestamps) which may change over time. Nodes in the static background knowledge part may in particular relate to entities such as equipment, components (of equipments), sites (e.g. sites where equipment may be located), and logical FALSE/TRUE. Nodes in the temporal background may, for example, relate to conditions or states relating to the entities in the static background knowledge part.

For example, a node in the static background knowledge part may refer to "equipment A", and a node in the temporal background knowledge part may refer to a defect type, "cracks" such that a directed edge representing a relation "hasDefect" and extending from the node "equipment A" to the node "cracks" may represent the statement or sentence "equipment A has a defect, namely cracks", at least at a specific time such as 5.25 p.m. and 55 seconds on the 31st of August, 2021. The according 4-tupel may be (s, r, o, t)=(equipment A, hasDefect, cracks, 31.08.2021:17.25.55). A static edge representing that equipment A always comprises component C may be written as a 3-tupel: (s, r, o)=(equipment A, hasComponent, component C). Note that static edges are defined by 3-tupels without a timestamp.

A cyclical temporal random nearest neighbor node walk (abbreviated as "CTRNNW") shall be understood as follows:
- "random nearest neighbor node walk" means that, when forming the walk and when starting from an end node of a starting edge, randomly an eligible edge connected to that end node is selected, the selected edge is added to the walk so far, and the process is continued starting from the end node of the newly added edge.
- "temporal" means that the walk is generated such that only such edges are eligible to be selected that are either static (i.e. valid for all timestamps) or which have a timestamp that is older (i.e. earlier) than the timestamps of all previous temporal edges within the walk so far. This guarantees that such walks are considered which represent causal relationships, i.e., wherein cause precedes effect.
- "cyclical" means that eventually only such generated random walks will be considered in which the object of the last edge in the walk is equal to the subject of the starting edge, SE. In other words, the "cyclical" walk is represented by a directed (ordered) closed chain in which the subject of each chain link (edge) is the object of the preceding chain link (edge).

The timestamp may comprise, or consist of, any type of information about a time at which an event or state has occurred and/or at which an event or state is ongoing (or TRUE). The timestamp may be accurate down to years, months, weeks, days, hours, minutes, seconds, milliseconds and/or the like, depending on the physical system and the time scales usually involved.

A cyclical temporal random nearest neighbor node walk, CTRNNW, may thus have the following form, starting with the starting edge, SE:
(x₁, h, xₙ₊₁, tₙ₊₁) , (xₙ₊₁, bₙ, xₙ, tₙ) ,..., (x₂, b₁, x₁, t₁), wherein t₁ < t₂ < ... <tₙ <tₙ₊₁, and wherein it is evident that x1 is both the subject of the starting edge, SE, and the object of the last edge (x₂, b₁, x₁, t₁), and wherein the subject xᵢ₊₁ of each edge is the object of the preceding edge as well. The above formula for a generic cyclical temporal random nearest neighbor node walk, CTRNNW, will be used throughout this disclosure for illustration.

Any or all of the modules described herein may be realized as software and/or as hardware. In particular, each module may be implemented in software run by a computing device. Some, or even all, modules of the system may be implemented by a cloud computing platform as a specific type of computing device. The apparatus described herein may thus comprise, or consist of, a computing device.

Such a computing device may be realised as any device, or any means, for computing, in particular for executing a software, an app, or an algorithm. For example, the computing device may comprise at least one processing unit such as at least one central processing unit, CPU, and/or at least one graphics processing unit, GPU, and/or at least one field-programmable gate array, FPGA, and/or at least one application-specific integrated circuit, ASIC and/or any combination of the foregoing.

The computing device may further comprise a working memory operatively connected to the at least one processing unit and/or a non-transitory memory operatively connected to the at least one processing unit and/or the working memory. The computing device may be realized as a local device, as a remote device (such as a server connected remotely to a client with a user interface) or as a combination of these. A part, or all, of the computing device may also be implemented by a cloud computing platform. The output interface may also be integrated into the computing device.

The output interface may output data and signals to the outside of the apparatus and/or to other parts or modules within the apparatus. The output interface may be realized in hardware and/or software, cable-bound and/or wireless, and in any combination thereof. It may comprise an interface to an intranet or the Internet, to a cloud computing service, to a remote server and/or the like. A display device or any other type of human-machine-interface, HMI, may be operatively connected to the output interface, wherein the display device may be part of the apparatus and/or positioned outside of the apparatus.

In systems based on cloud computing technology, a large number of devices is connected to a cloud computing system via the Internet. The devices may be located in a remote facility connected to the cloud computing system. For example, the devices can comprise, or consist of, equipments, sensors, actuators, robots, and/or machinery in an industrial set-up(s). The devices can be medical devices and equipments in a healthcare unit. The devices can be home appliances or office appliances in a residential/commercial establishment.

The cloud computing system may enable remote configuring, monitoring, controlling, and maintaining connected devices (also commonly known as 'assets'). Also, the cloud computing system may facilitate storing large amounts of data periodically gathered from the devices, analyzing the large amounts of data, and providing insights (e.g., Key Performance Indicators, Outliers) and alerts to operators, field engineers or owners of the devices via a graphical user interface (e.g., of web applications). The insights and alerts may enable controlling and maintaining the devices, leading to efficient and fail-safe operation of the devices. The cloud computing system may also enable modifying parameters associated with the devices and issues control commands via the graphical user interface based on the insights and alerts.

The cloud computing system may comprise a plurality of servers or processors (also known as 'cloud infrastructure'), which are geographically distributed and connected to each other via a network. A dedicated platform (hereinafter referred to as 'cloud computing platform') is installed on the servers/processors for providing above functionality as a service (hereinafter referred to as 'cloud service'). The cloud computing platform may comprise a plurality of software programs executed on one or more servers or processors of the cloud computing system to enable delivery of the requested service to the devices and its users.

One or more application programming interfaces (APIs) are deployed in the cloud computing system to deliver various cloud services to the users.

According to a second aspect of the present invention, a computer-implemented method for rule-based predictive maintenance of a physical system is provided, the method comprising steps of:
providing a knowledge graph including a plurality of nodes representing entities and a plurality of directed edges between at least a first subset of the nodes, each edge representing a kind of relationship of the type subject-relation-object between nodes connected by the edge,
wherein each of the edges is either provided with a timestamp indicating a time at which the relationship represented by said edge was determined to be true or represents a static relationship;
starting with hypothetical starting edge, SE, performing a number of cyclical temporal random nearest neighbor node walks, CTRNNW, such that the object of the last edge in the CTRNNW is the same as the subject of the starting edge, SE, and such that each subsequent edge in the CTRNNW after the starting edge, SE, either represents a static relationship or has a timestamp that is earlier than all of the timestamps of the preceding edges which do not represent a static relationship;
generating at least one rule for the relation of the starting edge, SE, by generating, for each CTRNNW, a rule head based on the starting edge, SE, of the CTRNNW and a rule body based on the remaining edges of the CTRNNW, wherein in both rule head and role body entities (i.e. subjects and objects) and timestamps are replaced by entity placeholders and timestamp placeholders according to a predefined scheme, respectively;
determining for each rule generated by the RGM a rule confidence value, RCV; and
outputting at least a part of the generated rules, preferably together with their respective rule confidence value, RCV.

Any apparatus according to any embodiment according to the first aspect of the present invention may be adapted or modified based on any variant, modification or refinement described for any method according to any embodiment according to the second aspect of the present invention and vice versa.

According to a third aspect of the present invention, a computer program product is provided which comprises executable program code configured to, when executed, perform the method according to any embodiment of the second aspect of the present invention.

According to a fourth aspect of the present invention, a non-transient computer-readable data storage medium is provided which comprises executable program code configured to, when executed, perform the method according to any embodiment of the second aspect of the present invention.

The non-transient computer-readable data storage medium may comprise, or consist of, any type of computer memory, in particular semiconductor memory such as a solid-state memory. The data storage medium may also comprise, or consist of, a CD, a DVD, a Blu-Ray-Disc, an USB memory stick or the like.

According to a sixth aspect of the present invention, a data stream is provided which comprises, or is configured to generate, executable program code configured to, when executed, perform the method according to any embodiment of the second aspect of the present invention.

Further advantageous variants, embodiments and refinements are found in the dependent claims as well as in the description with reference to the attached drawings.

In some advantageous embodiments, refinements, or variants of embodiments, according to the predefined scheme, for a CTRNNW of n+1 edges, in the rule body the timestamps t₁, ..., tₙ are replaced by the n earliest timestamp placeholders T₁,...,Tₙ of a time-ordered set of timestamp placeholders T₁ <...< Tₙ₊₁ according to their order within the CTRNNW; and

in the rule head the timestamp is replaced by the latest timestamp placeholder Tₙ₊₁ of the time-ordered set of n+1 timestamp placeholders T₁ <...< Tⁿ⁺¹.

Thus, when the rule is applied to a knowledge graph, the specific differences in time between the edges are irrelevant as only their time ordering is evaluated. This allows generalizing the rules over the specific circumstances which prompted them.

In some advantageous embodiments, refinements, or variants of embodiments, according to the predefined scheme the rule body is given by a logical "AND" connection between edges therein and each relation r of the edges therein is replaced by its inverse.

Moreover, within the rule body, the subject of the first edge (or: earliest edge), being the edge with the earliest timestamp placeholder T₁ of the time-ordered set of placeholders, is a first entity placeholder X₁ which is also the subject of the rule head;
wherein the object of the n-th edge, being the edge with the latest timestamp placeholder Tₙ of the time-ordered set of n timestamp placeholders, is an (n+1)-th entity placeholder which is also the object of the rule head; and
wherein in each edge with a timestamp placeholder Tᵢ of the remaining edges, the subject is an i-th entity placeholder which is also the object of the edge with the timestamp placeholder Tᵢ₋₁, and the object is an (i+1)-th entity placeholder which is also the subject of the edge with the timestamp placeholder Tᵢ₊₁.

It shall be understood that the "first edge" (or: earliest edge) in this context is not the first step in the random walk. The cyclical temporal random nearest neighbor node walk, CTRNNW, starts with the relation for which the rule is sought and extends from there, so it goes back in time. This means that the first step in the cyclical temporal random nearest neighbor node walk, CTRNNW, will be the n-th edge (timestamp tₙ), and the last step in the cyclical temporal random nearest neighbor node walk, CTRNNW, will become the "first edge" (timestamp t₁) in the rule body.

Thus, the above described cyclical temporal random nearest neighbor node walk, CTRNNW, (x₁, h, xₙ₊₁, tₙ₊₁) , (xₙ₊₁, bₙ, xₙ, tₙ),..., (x₂, b₁, x₁, t₁) is transformed into a rule as:

(X₁, h, Xₙ₊₁, Tₙ₊₁) <- (Xₙ, bₙ⁻¹, Xₙ₊₁, Tₙ) AND (Xₙ₋₁, bₙ₋₁⁻¹, Xₙ, Tₙ₋₁) AND ... AND (X₁, b₁⁻¹, X₂, T₁),

wherein (Xₙ, bₙ⁻¹, Xₙ₊₁, Tₙ) AND ... AND (X₁, b₁⁻¹, X₂, T₁) is the rule body (or: rule condition), and (X₁, h, Xₙ₊₁, Tₙ₊₁) is the "rule head" (or: the prediction) which according to the rule is (or will come) true when the rule body is true. Thus, similarly to the situation with the timestamps, the Xᵢ within each rule can match to any entity within the knowledge graph at all, provided that the same Xi is matched to the same entity within one application of the rule.

If any rule body matches is true for a given set of edges within a given knowledge graph, then the corresponding rule teaches that the rule head, with the corresponding placeholders replaced, is true.

Thus, when the rule is applied, the rule body is deemed to fit any instance in the knowledge graph in which the subjects, relations, and objects match and in which the time stamps of the edges in the instance have the same time ordering as the time stamps in the rule body. In other words, even if a rule has been created, for example, based on a cyclical temporal random nearest neighbor node walk, CTRNNW, in which the edges had timestamps that were each one minute apart, the rule body, by using the time-ordered set of timestamp placeholders, would be deemed to match any sequence of edges in the knowledge graph with the correct structure of subjects, relations, and objects, even if the timestamps of the edges were each one week apart, as long as the order in time is correct.

In some advantageous embodiments, refinements, or variants of embodiments, the rule confidence evaluating module, RCEM, is configured to determine the rule confidence value, RCV, for each rule by applying the rule body of the rule to all fitting subsets of the knowledge graph and calculating, as the rule confidence value, RCV, the number of instances (or: different chains of edges) in which the corresponding rule head of the rule fit (or: is true) as well, divided by the number of all subsets fitting the rule body. The factor resulting from this may be designated the accurate prediction frequency, APF. In some variants, the rule confidence value, RCV, may simply be equal to the accurate prediction frequency, APF.

Thus, if for one given rule the rule body fits, for example, ten different chains of edges in one knowledge graph, and if the corresponding rule head of said given rule fits only eight times out of the ten instances, or chains of edges, then the accurate prediction frequency, APF, of said given rule is determined to be 8/10=80%. These 80% may then be taken as the rule confidence value, RCV.

In other variants, the rule confidence value, RCV, may be based on the accurate prediction frequency, APF, but include additional factors or terms. For example, the rule confidence value, RCV, may be the accurate prediction frequency, APF, to which an exponential function is added which has a time difference between two edges of the cyclical temporal random nearest neighbor node walk, CTRNNW, on which the rule is based as an argument. The two edges may be the first and the last edge of the rule body, i.e. tₙ₊₁-t₁.

The exponential function may especially decrease with increasing time difference between the two edges. Thus, one possible formula is:
RCV=APF+exp(-c*(tₙ₊₁-t₁)), with c a positive proportionality constant.

Thus, the rule confidence value, RCV, becomes larger with decreasing total time duration of the cyclical temporal random nearest neighbor node walk, CTRNNW. An intuitive way to understand this is that a causal link between the edges in the rule body becomes increasingly less probably with increasing time difference between the edges. The proportionality constant c may be chosen based on typical timeframes between events or changes in status for a particular physical system. For example, c may be the inverse time of a timeframe deemed typical for causal propagation within the physical system. For a system of pumps in which fluctuations in a commonly pumped fluid can affect each pump, c may be the sound velocity in the fluid, divided by an average distance between the pumps.

The rule confidence value, RCV, helps a human user of the apparatus to better understand the reliability of a particular prediction based on the rules by being able to investigate the rule confidence value, RCV, of the rules that form the basis for the prediction. Since the apparatus may be set up to provide a user with choices, or to automatically take appropriate measures, the rule confidence value, RCV, of the rule or rules on which a particular prediction is based may be used to determine the further course of action.

For example, an automatic system may be set up such that any prediction made based on rules which, each individually, have a rule confidence value, RCV, over a predefined (or task-specific, or equipment-specific, or dynamic, or user-settable) threshold, are deemed to be accurate and that corresponding counter measures are automatically taken. An apparatus set up in this way may be designated as an apparatus for performing predictive maintenance.

In some advantageous embodiments, refinements, or variants of embodiments, the apparatus further comprises a display device (or: display module) configured to receive output of the output module and to display, to a user, a prediction based on at least one rule together with the corresponding rule confidence value, RCV.

In some advantageous embodiments, refinements, or variants of embodiments, the apparatus further comprises a query module, QM, configured to receive a query in which, out of:
- subject s,
- relation r,
- object o, and
- timestamp t,
one is replaced by a query placeholder and the remainder are given. The query module, QM, is further configured to provide, based on the generated rules and the knowledge graph, at least one possible answer for the query placeholder.

Thus, the following queries are possible:
- "subject queries", i.e. queries of the type (?, r, o, t), request a prediction for which subject has, at timestamp t, relation r with object o;
- "relation queries", i.e. queries of the type (s, ?, o, t), request a prediction for which relation the subject s has with object o at timestamp t;
- "object queries", i.e. queries of the type (s, r, ?, t), request a prediction with which object o subject s has relation r at timestamp t; and
- "timestamp queries", i.e. queries of the type (s, r, o, t) request a prediction when subject s will have relation r with object o.

Typical predictive maintenance tasks can thus be reformulated (symbolized by "->") into queries as:
- "when will equipment A have defect 'cracks'?"
   -> (equipment A, hasDefect, 'cracks', ?)
- "which defect or defects will occur at time t at equipment A?"
   -> (equipment A, hasDefect, ?, t)
- "which entity will have cracks on January 1^{st}, 2022?")
   -> (?, hasDefect, 'cracks', 01/01/2022)
and so on.

A user may set three of the four parameters s, r, o, t for example by choosing from dropdown menus or by writing in free text fields, and the fourth parameter will be automatically set as a placeholder ("?") in a graphical user interface, GUI.

In some advantageous embodiments, refinements, or variants of embodiments, the apparatus further comprises a display device configured to receive output of the output module and to display, to a user, each of the at least one possible answer together with any of:
- a corresponding rule and rule body on which the corresponding answer is based;
- the corresponding rule confidence value, RCV, of the rule;
- a query response confidence value, QRCV, indicating a confidence of the response to the query which is at least in part based on the rule confidence value, RCV, of at least one rule on which the query response is based.

The query response confidence value, QRCV, may, in particular, indicate not only the rule confidence value, RCV, of one or more rules employed for the prediction but may in particular be based on the instance (or chain of edges) within the knowledge graph being queried to which the one or more rules were applied in order to generated the prediction. Preferably, the query response confidence value, QRCV, is based at least on at least one time difference between two, preferably adjacent, timestamps of the instance (or chain of edges). One reasoning behind this may be that, although for the creation of the rules timestamps are characterized by their time ordering exclusively, in a real physical system temporal proximity between links (edges) of a causal chain (instance or chain of edges in the knowledge graph) may increase the likelihood that the links are causally related.

For example, a rule may "trigger", that is deemed to fit a particular edge in a particular knowledge graph by its rule body being applied successfully to a chain of edges within the knowledge graph, even if every two adjacent edges are separated by more than a year.

In order to factor this in, the query response confidence value, QRCV, may comprise the rule confidence value, RCV, as a factor or term, and may also comprise an exponential function with a time difference between two edges as an argument. The two edges may be the first and the last edge of the instance fitting the rule body, i.e. tₙ₊₁-t₁.

The exponential function may especially decrease with increasing time difference between the two edges. Thus, one possible formula is:
QRCV=RCV+exp(-k* (tₙ₊₁-t₁)), with k a positive proportionality constant. Thus, the query response confidence value, QRCV, becomes larger with decreasing total time duration of the instance fitting the rule body.

An intuitive way to understand this is that a causal link between the edges in the chain of edges becomes increasingly less probable with increasing time difference between the edges. The proportionality constant k may be chosen based on typical timeframes between events or changes in status for a particular physical system, e.g., as has been described in the foregoing with respect to the proportionality constant c. If both formulae using c and k are applied, c and k may be equal or different. It shall be understood that even more sophisticated formulae for calculating the query response confidence value, QRCV, may be employed.

The display device may, for example, be a monitor, a touchscreen, a virtual reality system, an augmented reality system, a holographic system, a projector or the like.

In some advantageous embodiments, refinements, or variants of embodiments, the apparatus further comprises an update module, UM, configured to receive a new piece of information about the physical system.

The update module, UM, may be configured to generate, based on the received new piece of information, an addition and/or an amendment to the knowledge graph. For example, a new equipment added to the physical system can be reflected in an amendment to the knowledge graph by adding a new node and at least one new edge representing at least one feature of the equipment such as its position or components or the like.

Moreover, the update module, UM, may be configured to instruct the random walk generating module, RWGM, the rule generating module, RGM, and the rule confidence evaluating module, RCEM, to generate at least one new cyclical temporal random nearest neighbor node walk, CTRNNW, at least one new rule and a corresponding rule confidence value, RCV, for each new rule, respectively. It will be understood that any change to the knowledge graph may provide new possibilities for finding new rules and/or may necessitate a new development of new rules, as additional nodes and edges mean additional possible cyclical temporal random nearest neighbor node walks, CTRNNW.

In some advantageous embodiments, refinements, or variants of embodiments, in the method according to the second aspect of the present invention, according to the predefined scheme, for a CTRNNW of n+1 edges,

in the rule body the timestamps are replaced by the n earliest timestamp placeholders T₁,...,Tₙ of a time-ordered set of timestamp placeholders T₁ <...< Tₙ₊₁ according to their order within the CTRNNW; and
in the rule head the timestamp is replaced by the latest timestamp placeholder Tₙ₊₁ of the time-ordered set of n+1 timestamp placeholders T₁ <...< Tⁿ⁺¹, with the advantages that have been described in the foregoing.

In some advantageous embodiments, refinements, or variants of embodiments, in the method, according to the predefined scheme, the rule body is given by a logical "AND" connection between edges therein and wherein each relation of the edges therein has been replaced by its inverse;
wherein, within the rule body, the subject of the first edge, being the edge with the earliest timestamp placeholder T₁ of the time-ordered set of placeholders, is a first entity placeholder X₁ which is also the subject of the rule head; wherein the object of the n-th edge, being the edge with the latest timestamp placeholder Tₙ of the time-ordered set of n timestamp placeholders, is an (n+1)-th entity placeholder which is also the object of the rule head; and wherein in each edge with a timestamp placeholder Tᵢ of the remaining edges, the subject is an i-th entity placeholder which is also the object of the edge with the timestamp placeholder Tᵢ₋₁, and the object is an (i+1)-th entity placeholder which is also the subject of the edge with the timestamp placeholder Tᵢ₊₁. Variants, examples and advantages have been described in the foregoing with respect to the apparatus.

In some advantageous embodiments, refinements, or variants of embodiments, determining the rule confidence value, RCV, for each rule comprises applying the rule body of the rule to all fitting subsets of the knowledge graph and calculating, as the rule confidence value, RCV, the number of instances in which the corresponding rule head of the rule fit as well divided by the number of all subsets fitting the rule body. Variants, examples and advantages have been described in the foregoing with respect to the apparatus.

In some advantageous embodiments, refinements, or variants of embodiments, the method further comprises receiving a query in which, out of the parameters
- subject s,
- relation r,
- object o, and
- timestamp t,
one parameter is replaced by a query placeholder ("?") and the remainder are given; and further comprises providing, based on the generated rules and the knowledge graph, at least one possible answer for the query placeholder. Variants, examples and advantages have been described in the foregoing with respect to the apparatus.

In some advantageous embodiments, refinements, or variants of embodiments, the method further comprises displaying (e.g. using a display device as described above) to a user each of the at least one possible answer together with any (or all) of:
- a corresponding rule and rule body on which the corresponding answer is based;
- the corresponding rule confidence value, RCV, of the rule; and
- a query response confidence value, QRCV, indicating a confidence of the response to the query which is at least in part based on the rule confidence value, RCV, of at least one rule on which the query response is based.

Variants, examples and advantages have been described in the foregoing with respect to the apparatus.

In some advantageous embodiments, refinements, or variants of embodiments, the method further comprises receiving a new piece of information about the physical system and to generating, based thereon, an addition and/or an amendment to the knowledge graph and/or instructing the generating of least one new rule and the determining of a corresponding rule confidence value, RCV, for each new rule, respectively. Variants, examples and advantages have been described in the foregoing with respect to the apparatus.

### Brief description of the drawings

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.

In the figures:
- Fig. 1: shows a schematic block diagram illustrating an apparatus according to an embodiment of the invention;
- Fig. 2: shows a schematic illustration of an exemplary knowledge graph;
- Fig. 3: shows a schematic flow diagram illustrating a method according to another embodiment of the invention;
- Fig. 4: shows a schematic illustration of a computer program product according to another embodiment of the present invention; and
- Fig. 5: shows a schematic illustration of a data storage medium according to yet another embodiment of the present invention.

### Detailed description of the invention

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

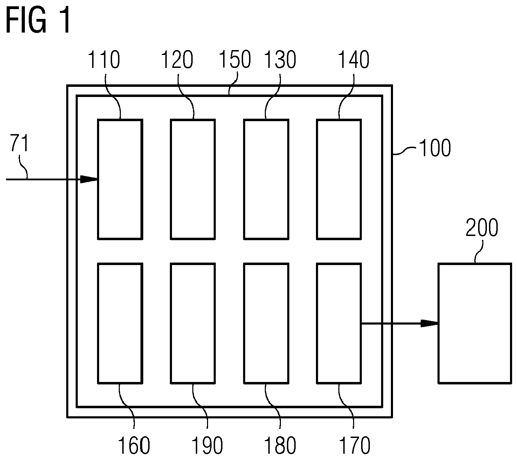

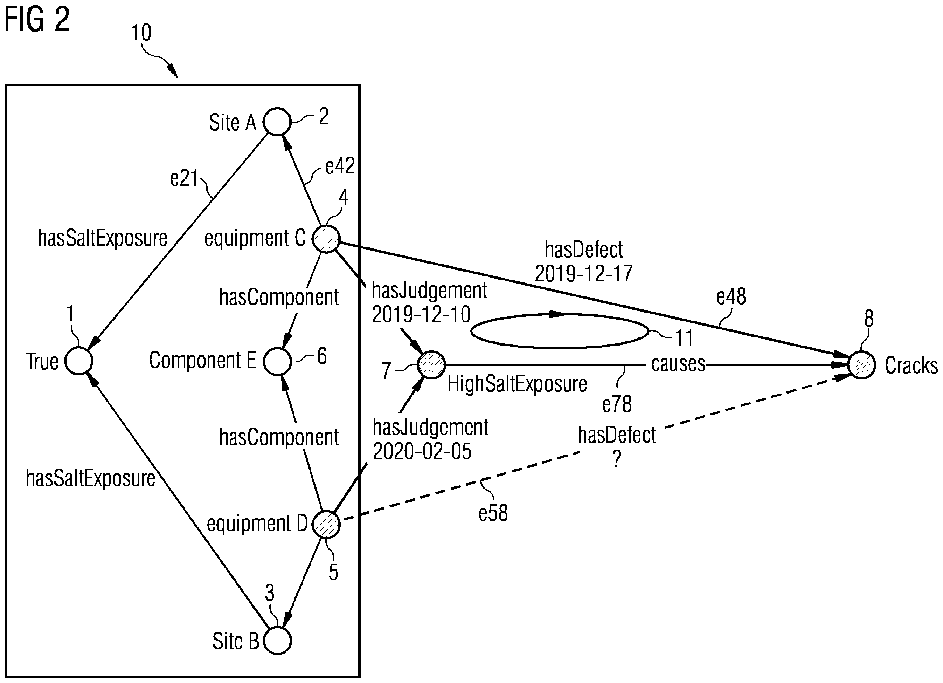

Fig. 1 shows a schematic block diagram illustrating an apparatus 100 according to an embodiment of the first aspect of the present invention. The apparatus 100 will be described in particular with respect to Fig. 2.

Fig. 2 shows a schematic illustration of an exemplary knowledge graph 10.

Referring to Fig. 1, the apparatus 100 comprises a computing device 150 implementing various modules as software although also other realizations are possible. Specifically, the computing device 150 implements a knowledge graph module, KGM 120, configured to implement a knowledge graph 10 (see Fig. 2) including a plurality of nodes 1-8 representing entities and a plurality of directed edges e21, e42, ..., e78 between at least a first subset of the nodes 1-8. For ease of reference, the directed edges are designated such that edge eYZ is directed from node Y to node Z, i.e. edge e21 is a directed edge from node 2 to node 1.

In Fig. 2, the nodes 1-8 represent:
- node 1:: logical TRUE
- node 2:: "site A"
- node 3:: "site B"
- node 4:: "equipment C"
- node 5:: "equipment D"
- node 6:: "component E"
- node 7:: "HighSaltExposure"
- node 8:: "Cracks"

The edges eYZ in Fig. 2 represent edges with the following relations r between there origin node Y and their target node Z:
- edge e21:: r = hasSaltExposure
- edge e31:: r = hasSaltExposure
- edge e42:: r = isLocatedAt
- edge e53:: r = isLocatedAt
- edge e21:: r = hasSaltExposure
- edge e46:: r = comprises
- edge e56:: r = comprises
- edge e47:: r = hasJudgement
- edge e57:: r = hasJudgement
- edge e48:: r = hasDefect
- edge e78:: r = causes
- edge e58:: r = hasDefect,
wherein in the presently employed example, edge e48 will be the starting edge, SE. Edge e58 is an edge that has not yet been added to the knowledge graph 10. In an example it will be shown how such an edge e58 can nevertheless be predicted.

As has been described in the foregoing, from the presence of an edge eYZ also the presence of the inverse edge eZY follows, in which the relation is inverted, and subject and object are switched, while the timestamp (if present, i.e. in temporal edges) remains unchanged.

Edges e21, e31, 342, e53, e46, e56, and e78 are in this example static edges, i.e. edges that are valid for all timestamps. It will be understood that these edges describe relationships that are usually permanent, although they may be changed in the physical system at some point, which in turn may necessitate a re-drawing of the knowledge graph 10 and possibly a re-performing of the method described in the following.

Thus, in the nomenclature described in the foregoing, for example edge 53 may be described by a 3-tupel as e53=(equipment D, isLocatedAt, site B), representing the relationship that equipment D is always located at site B.

For the other, temporal edges e47, e57, e48, and e78, timestamps are given. Thus, edge e47 may be described by the 4-tupel e47=(equipment C, hasJudgement, highSaltExposure, 2019-12-10), representing the relationship that equipment C has been judged to have high salt exposure at 2019-12-10.

The apparatus 100 also comprises an update module, UM 110, implemented by the computing device 150 and configured to receive data 71 indicating relationships, especially temporal relationships represented by temporal edges. These data 71 may be received from any type of data source, for example from sensors, actuators and so on. In modern IoT or smart factory setting, the number of data sources is often high so that a large amount of data 71 are continuously input into the knowledge graph. The data sources may be part of the apparatus 100, or may be separate from it.

The knowledge graph module, KGM 120, is configured to continuously update the knowledge graph 10 based on the received data 71, in particular to add new temporal edges if this is indicated by the data. For example, a chemical sensor may regularly judge whether equipment A has high salt exposure and may send the corresponding data to the update module, UM 110, of the apparatus 100. The knowledge graph module, KGM 120, may then, whenever the received data 71 indicates that for a specific timestamp indeed equipment A has high salt exposure, add another edge e47 with the specific timestamp to the existing one(s). As has been described, the update module, UM 110, may also be configured to add or amend nodes and/or the like.

As has been described in the foregoing, the apparatus 100 further comprises modules, which are configured to, together, generate at least one rule that is applicable to the knowledge graph 10 in order to be able to answer queries and/or make predictions. The workings of the modules can be governed by a central controller of the apparatus 100, or by the individual modules communicating with, and instructing, each other.

In the following, first examples for the functions of the apparatus 100 relating to the generation of rules are given, and then examples for the utilization of the rules and the knowledge graph 10 are provided. First, it will be assumed that a rule is sought which relates to the timestamp of edge e58. Specifically, a rule is sought which allows a prediction, when equipment D will have the defect "cracks", or, more generally, when equipment D will have any defect (or, more formally: when equipment D will have the relation "hasDefect" with respect to any defect). Thus, a starting node representing a subject s (node 5: "equipment D"), a relation "hasDefect", and an end node representing an object o (node 8:"cracks") are given, and the desired rule allows a prediction when this relationship (or, more generally, the relation therein) will become true. By comparison, one understands that this rule corresponds to a predictive maintenance task in which the fundamental question is "when will equipment D break down".

The apparatus 100 comprises a random walk generating module, RWGM 130, implemented by the computing device 150 and configured to perform a number of cyclical temporal random nearest neighbor node walks, CTRNNW 11, as defined in the foregoing.

Each cyclical temporal random nearest neighbor node walk, CTRNNW 11, starts with a starting edge, which depends on the relation for which a rule is sought. In the present example, a rule is sought for the relation "hasDefect". Since there is only one edge, e48, having this relation in the knowledge graph 10, the choice of starting edge is clear. In case that there are several edges with the desired relation, preferably the procedure described herein is performed for each of these edges separately. In some variants, the relation for which a rule is sought will be provided by a user, or a list of such relations will be provided. The apparatus 100 may then be configured such as to perform the procedure described herein for each of these relations, and preferably for each relation then with each suitable starting edge separately.

For each starting edge there may be several possible cyclical temporal random nearest neighbor node walk, CTRNNW 11, which will preferably all be generated by the random walk generating module, RWGM 130.

As has been described in the foregoing, the cyclical temporal random nearest neighbor node walk, CTRNNW, is performed such that the object of the last edge in the CTRNNW is the same as the subject of the starting edge, SE e48, and such that each subsequent edge in the CTRNNW after the starting edge, SE e48, either represents a static relationship or has a timestamp that is earlier than all of the timestamps t₁, ..., tₙ of the preceding edges which do not represent a static relationship.

For example, with respect to Fig. 2, one possible cyclical temporal random nearest neighbor node walk, CTRNNW 11, may comprise the following "steps":
1) e48 (equipment C, hasDefect, cracks, 2019-12-17), starting edge, SE
2) e87, being edge e78 with the relation "causes" being inverted to "being caused by", or, formally, "causes"⁻¹
3) e74, being edge e47 with the relation "hasJudgement" being inverted to "isJudgedAt", or, formally, "hasJudgement"⁻¹

Note that this constitutes a closed cyclical temporal random nearest neighbor node walk, CTRNNW 11, in which the subject (node 4, "equipment C") of the starting edge, SE e48, is the same as the object of the last edge, e74. The cyclicality can be easily seen in the designations in which one digit is always repeated: e48->e87->e74. In Fig. 2, the cyclical temporal random nearest neighbor node walk, CTRNNW 11, is abstractly depicted by a closed circle within the edges forming the CTRNNW 11.

The apparatus 100 further comprises a rule generating module, RGM 140, implemented by the computing device 150 and configured to generate at least one rule for at least one edge starting edge, SE e48. As has been described in the foregoing, this is done by generating, for each CTRNNW 11, a rule head based on the SE e48 of the CTRNNW 11 and a rule body based on the remaining edges of the CTRNNW 11.

In both the rule head and the role body, entities and timestamps are replaced by entity placeholders and timestamp placeholders according to a predefined scheme, respectively. One particularly advantageous scheme has been described in the foregoing, in which the timestamps are replaced by time-ordered timestamp placeholders and the entities (subjects and objects) by entity placeholders, maintaining the circle shape and the time ordering while eliminating the specific timestamp information. Moreover, the rule body is given by a logical "AND" connection between edges therein and each relation r of the edges therein is replaced by its inverse. Note that, since we used edges e87 and e74 for the CTRNNW 11, in which we had to invert the relations of edges e78 and e47, inverting the relations again will yield the original relations, i.e. "causes" and "hasJudgement", respectively.

Thus, in the above example, the rule head is simply:

### (X1, hasDefect, X₃, T₃)

The rule body is generated by the rule generating module, RGM 140, as:

### (X1, hasJudgement, X2, T₁) AND (X2, causes, X3, T₂)

Thus, the rule body can be paraphrased as: this rule body is True if X1 has judgement X2 at a time T₁ and at a later time T₂>T₁ then X2 causes X3. Note that e78 is a static edge so that the "causes" relationship represented therewith is considered to be always fulfilled.

The rule itself says: when the rule body is True, then the rule head is True as well. In summary, this simple exemplary rule says: if X1 has judgement X2 at a time T₁ and at a later time T₂>T₁ then X2 causes defect X3, then X1 has defect X3. It is evident that this is a sensible rule, but it should be noted that this intuitively correct rule has been generated by formal rules alone. It should also be noted that in this way, we have generalized the specific data involving particular entities (judgement highSaltExposure specifically, for example) to a more abstract rule.

For the present example, a simple knowledge graph 10 and rule have been selected; however, it will be understood that in actual, more complex knowledge graphs, a wealth of rules can be found in this way that would be completely beyond the scope of a human, not only because of the sheer number of possibilities but also because of the lengths of the possible walks and the obscurity of the validity of each rule.

The apparatus 100 further comprises a rule confidence evaluating module, RCEM 160, implemented by the computing device 150 and configured to determine for each rule generated by the RGM 140 a rule confidence value, RCV. The rule confidence value, RCV, may be defined and calculated as has been described in the foregoing, specifically based on (or even consisting of) the accurate prediction frequency, APF. In the present example, the accurate prediction frequency, APF, is 100%, since in the given knowledge graph 10, the above rule body only (trivially) matches e48 and e78, but it will be understood, taking into account the foregoing description and explanations, how the rule confidence value, RCV, may be calculated.

The apparatus 100 may further comprise an output module 170 configured to output at least a part of the generated rules together with their respective rule confidence value, RCV. The output module may be partially implemented by the computing device 150 and/or partially implemented in hardware. For example, the output module 170 may comprise physical or non-physical interfaces to the exterior of the apparatus 100 in order to transmit data, e.g. the generated rules and/or their rule confidence value, RCV, to other devices such as a display device 200. The display device 200 may also be arranged as part of the apparatus 100.

The apparatus 100 may further comprise a query module, QM 180, implemented by the computing device 150 and configured to receive a query in which, out of object, relation, subject, and timestamp one is replaced by a query placeholder and the remainder are given, and configured to provide, based on the generated rules and the knowledge graph, at least one possible answer for the query placeholder.

For example, for predictive maintenance, the question may be posed when equipment D will have any kind of defect. In order to answer such a query, the rule determined in the above example may be used.

In the present simple example, the above rule body would then trivially match the CTRNNW 11 from which it stems, yielding no new information. However, the rule body would also match the following chain of edges present in knowledge graph 10:
(equipment D, hasJudgement, highSaltExposure, 2020-02-05) AND (highSaltExposure, causes, cracks, always),

in which we have used the 4-tupel description for static edges. The rule that has been defined by the rule generating module, RGM 140, then predicts that the rule head with the placeholders replaced accordingly will also be true, i.e. that
(equipment D, hasDefect, cracks, sometime later than 2020-02-05)

As has been described in the foregoing, the response to the query may be accompanied by a rule confidence value, RCV, for the rule on which it is based and/or by a query response confidence value, QRCV, so that the user may accurately judge the validity of the prediction.

Moreover, as is evidenced by the foregoing, it is comparatively easy for a user that is presented not only with the prediction but also with the RCV and/or QRCV and the underlying rule, to confirm the validity of the automatically generated rule. A graphical user interface, GUI, for example displayed by the display device 200, may present a user with options to review the RCV, the QRCV, the underlying rules and so on. This resolves the infamous "black box" problem that many automated systems provide (mostly) excellent results but in a way which cannot be verified or corroborated by humans so that, for reasons of safety, often the results must be disregarded.

The user may also be presented, by the display device 200, with a list of N predictions in the graphical user interface, GUI, N being a predefined or user-settable or automatically determined integer. The predictions may be ranked according to their query response confidence value, QRCV, such that only the predictions deemed most likely to be true are displayed. The GUI may also present the user with options to react to the predictions, e.g. by scheduling maintenance operations. In other variants, the apparatus 100 may comprise a maintenance module 190 configured to automatically schedule, instruct, and/or arrange maintenance when a prediction with a query response confidence value, QRCV, larger than a threshold value is predicted. A combination is also possible, where in clear-cut cases (query response confidence value, QRCV, larger than a first threshold) maintenance is scheduled and/or performed and/or instructed automatically by the apparatus 100, and in cases with a lower query response confidence value, QRCV, between a second threshold and the first threshold, a user is asked for review and instructions.

As has been described in the foregoing, new information about the physical system (e.g. production plant) is continuously created. It is therefore preferred that the update module, UM 110, is used for incorporating new information into the knowledge graph 10 continuously or at least regularly. After each change to the knowledge graph 10, the procedure for generating rules can be performed automatically, and new rules may be applied in real-time to make maintenance predictions based on the current status of the physical system.

The rules automatically generated in the procedure as outlined above could also be transferred to other physical systems different from the one for which the rules were generated, for example to a new product line that is similar but so new that not enough historical information exists for the extraction of rules specific to that system. In such a case, under certain conditions such as a common vocabulary, the automatically generated rules may be transferred and applied, preferably automatically.

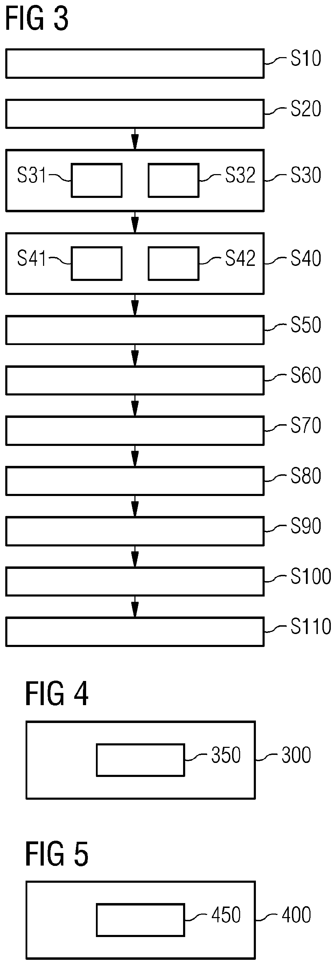

Fig. 3 shows a schematic flow diagram illustrating a computer-implemented method for rule-based predictive maintenance of a physical system according to another embodiment of the invention. The method is in particular performable with the apparatus 100 of Fig. 1 and may be modified, amended or augmented by any options or variants described with respect to the apparatus 100 in the foregoing, and vice versa. Thus, for the description of Fig. 3 frequent reference will be made to the description of Fig. 1 and Fig. 2 as well as to the foregoing summary of the invention.

In a step S10, a knowledge graph 10 is provided which includes a plurality of nodes 1..8 (see fig. 2) representing entities and a plurality of directed edges e21..e78 between at least a first subset of the nodes 1..8, each edge 21..e78 representing a relationship of the type subject-relation-object between nodes connected by the edge,
wherein each of the edges e21..e78 is either provided with a timestamp indicating a time at which the relationship represented by said edge e21..e78 was determined to be true or represents a static relationship. The knowledge graph 10 may in particular be provided as has been described in the foregoing with respect to the knowledge graph module, KGM 120.

In a step S20, starting with a starting edge, SE e48, a number of cyclical temporal random nearest neighbor node walks, CTRNNW 11, is performed such that the object of the last edge e21..e78 in the CTRNNW 11 is the same as the subject of the starting edge, SE, e48 and such that each subsequent edge e21..e78 in the CTRNNW 11 after the starting edge, SE e48, either represents a static relationship or has a timestamp that is earlier than all of the timestamps of the preceding edges which do not represent a static relationship. Step S20 may in particular be performed as has been described in the foregoing with respect to the random walk generating module, RWGM 130.

In a step S30, at least one rule for the relation of the starting edge, SE e48, is generated, by generating S31 for each CTRNNW 11 a rule head based on the SE e48 of the CTRNNW 11 and a rule body based on the remaining edges of the CTRNNW 11, wherein in both rule head and role body entities and timestamps are replaced by entity placeholders and timestamp placeholders according to a predefined scheme, respectively. Step S20 may in particular be performed as has been described in the foregoing with respect to the rule generating module, RGM 140.

In a step S40, for each rule generated by the RGM a rule confidence value, RCV is determined, in particular as has been described in the foregoing with respect to the rule confidence evaluating module, RCEM 160. Determining S4) the rule confidence value, RCV, for each rule may comprise applying S41 the rule body of the rule to all fitting subsets of the knowledge graph 10 and calculating S42, as the rule confidence value, RCV, the number of instances in which the corresponding rule head of the rule fit as well divided by the number of all subsets fitting the rule body, i.e. calculating the accurate prediction frequency, APF. The accurate prediction frequency, APF, may be used for the calculation of the rule confidence value, RCV, or it may be used as the rule confidence value, RCV.

In a step S50, at least a part of the generated rules together with their respective rule confidence value, RCV, preferably as has been described with respect to the output module 170.

In an optional step S60, a query is received in which, out of subject, relation, object, and timestamp one is replaced by a query placeholder and the remainder are given.

In a step S70, based on the generated rules and the knowledge graph 10, at least one possible answer for the query placeholder is provided. Steps S60 and S70 may be performed in particular as has been described with respect to the query module, QM 180.

In a step S80, to a user to each of the at least one possible answer may be displayed, e.g. using a display device 200, together with any of:
- a corresponding rule and rule body on which the corresponding answer is based;
- the corresponding rule confidence value, RCV, of the rule; and
- a query response confidence value, QRCV, indicating a confidence of the response to the query which is at least in part based on the rule confidence value, RCV, of at least one rule on which the query response is based.

Step S80 may in particular be performed as has been described with respect to the output module 170 and the display device 200, especially with respect to a graphical user interface, GUI.

In a step S90, a new piece of information, or new data 71 about the physical system is received. In a step S100 based thereon, an addition and/or an amendment to the knowledge graph 10 is performed. Alternatively or additionally, in a step S110, the generating S30 of least one new rule and the determining S40 of a corresponding rule confidence value, RCV, for each new rule, respectively, is instructed.

Fig. 4 shows a schematic block diagram illustrating a computer program product 300 comprising executable program instructions 350 configured to, when executed, perform the method according to an embodiment of the second aspect of the present invention, in particular as has been described in the foregoing with respect to Fig. 1 to Fig. 3.

Fig. 5 shows a schematic block diagram illustrating a non-transient computer-readable data storage medium 400 comprising executable program instructions 450 configured to, when executed, perform the method according to an embodiment of the second aspect of the present invention, in particular as has been described in the foregoing with respect to Fig. 1 to Fig. 3.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated.

## Claims

1. An apparatus (100) for rule-based predictive maintenance of a physical system, comprising:
a knowledge graph module, KGM (110), configured to implement a knowledge graph (10) including a plurality of nodes (1..8) representing entities and a plurality of directed edges (e21..e78) between at least a first subset of the nodes (1..8), each edge (e21..e78) representing a relationship between nodes (1..8) connected by said edge (e21..e78) of the type subject-relation-object;
wherein each of the edges (e21..e78) is either provided with a timestamp t₁, ..., tₙ indicating a time at which the relationship represented by said edge (e21..e78) was determined to be true or represents a static relation;
a random walk generating module, RWGM (120), configured to:
- starting with a starting edge, SE (e48) comprising a relation for which a rule is sought, perform a number of cyclical temporal random nearest neighbor node walks, CTRNNW (11), such that the object of the last edge in the CTRNNW (11) is the same as the subject of the SE (e48), and such that each subsequent edge in the CTRNNW (11) after the SE (48) either represents a static relationship or has a timestamp that is earlier than all of the timestamps t₁, ..., tₙ of the preceding edges which do not represent a static relationship;
a rule generating module, RGM (140), configured to generate at least one rule for the relation of the starting edge, SE (e48), by:
- generating (S30), for each CTRNNW (11), a rule head based on the SE (e48) of the CTRNNW (11) and a rule body based on the remaining edges of the CTRNNW (11), wherein in both rule head and role body entities and timestamps are replaced by entity placeholders and timestamp placeholders according to a predefined scheme, respectively;
a rule confidence evaluating module, RCEM (160), configured to determine (S40) for each rule generated by the RGM (140) a rule confidence value, RCV; and
an output module (170) configured to output at least a part of the generated rules together with their respective rule confidence value, RCV.

2. The apparatus (100) of claim 1
wherein, according to the predefined scheme, for a CTRNNW (11) with n+1 edges (e21..e78),
in the rule body the timestamps t₁, ..., tₙ are replaced by the n earliest timestamp placeholders T₁,...,Tₙ of a time-ordered set of timestamp placeholders T₁ <...< Tₙ₊₁ according to their order within the CTRNNW (11); and
in the rule head the timestamp is replaced by the latest timestamp placeholder Tₙ₊₁ of the time-ordered set of n+1 timestamp placeholders T₁ <...< Tⁿ⁺¹.

3. The apparatus (100) of claim 2,
wherein, according to the predefined scheme, the rule body is given by a logical "AND" connection between edges therein and wherein each relation of the edges (e21..e78) therein is replaced by its inverse;
wherein, within the rule body, the subject of the first edge, being the edge with the earliest timestamp placeholder T₁ of the time-ordered set of placeholders, is a first entity placeholder X₁ which is also the subject of the rule head; wherein the object of the n-th edge, being the edge with the latest timestamp placeholder Tₙ of the time-ordered set of n timestamp placeholders, is an (n+1)-th entity placeholder which is also the object of the rule head; and
wherein in each edge with a timestamp placeholder Tᵢ of the remaining edges, the subject is an i-th entity placeholder which is also the object of the edge with the timestamp placeholder Tᵢ₋₁, and the object is an (i+1)-th entity placeholder which is also the subject of the edge with the timestamp placeholder Tᵢ₊₁.

4. The apparatus (100) of any of claims 1 to 3,
wherein the rule confidence evaluating module, RCEM (160), is configured to determine the rule confidence value, RCV, for each rule by applying the rule body of the rule to all fitting subsets of the knowledge graph (10) and calculating, as the rule confidence value, RCV, the number of instances in which the corresponding rule head of the rule fit as well divided by the number of all subsets fitting the rule body.

5. The apparatus (100) of any of claims 1 to 4,
further comprising a query module, QM (180), configured to receive a query in which, out of object, relation, subject, and timestamp one is replaced by a query placeholder and the remainder are given, and configured to provide, based on the generated rules and the knowledge graph (10), at least one possible answer for the query placeholder.

6. The apparatus (100) of claim 5,
further comprising a display device (300) configured to receive output of the output module (170) and to display (S80), to a user, each of the at least one possible answer together with any of:
- a corresponding rule and rule body on which the corresponding answer is based;
- the corresponding rule confidence value, RCV, of the rule;
- a query response confidence value, QRCV, indicating a confidence of the response to the query which is at least in part based on the rule confidence value, RCV, of at least one rule on which the query response is based.

7. The apparatus (100) of any of claims 1 to 6,
further comprising an update module, UM (110), configured to receive (S90) new data (71) about the physical system, to generate (S100), based thereon, an addition and/or an amendment to the knowledge graph (10) and/or to instruct the random walk generating module, RWGM (120), the rule generating module, RGM (130),
and the rule confidence evaluating module, RCEM (160), to generate at least one new cyclical temporal random nearest neighbor node walk, CTRNNW (11), at least one new rule and a corresponding rule confidence value, RCV, for each new rule, respectively.

8. A computer-implemented method for rule-based predictive maintenance of a physical system, comprising steps of:
providing (S10) a knowledge graph (10) including a plurality of nodes (1..8) representing entities and a plurality of directed edges (e21..e78) between at least a first subset of the nodes (1..8), each edge (e21..e78) representing a relationship of the type subject-relation-object between nodes connected by the edge (e21..e78),
wherein each of the edges (e21..e78) is either provided with a timestamp indicating a time at which the relationship represented by said edge was determined to be true or represents a static relationship;
starting with a starting edge, SE (e48), performing (S20) a number of cyclical temporal random nearest neighbor node walks, CTRNNW (11), such that the object of the last edge (e21..e78) in the CTRNNW (11) is the same as the subject of the starting edge, SE, (e48) and such that each subsequent edge (e21..e78) in the CTRNNW (11) after the starting edge, SE (e48), either represents a static relationship or has a timestamp that is earlier than all of the timestamps of the preceding edges which do not represent a static relationship;
generating (S30) at least one rule for the relation of the SE (e48) by generating (S31) for each CTRNNW (11) a rule head based on the SE (e48) of the CTRNNW (11) and a rule body based on the remaining edges of the CTRNNW (11), wherein in both rule head and role body entities and timestamps are replaced by entity placeholders and timestamp placeholders according to a predefined scheme, respectively;
determining (S40) for each rule generated by the RGM a rule confidence value, RCV; and
outputting (S50) at least a part of the generated rules together with their respective rule confidence value, RCV.

9. The method of claim 8, wherein, according to the predefined scheme, for a CTRNNW of n+1 edges,
in the rule body the timestamps are replaced by the n earliest timestamp placeholders T₁,...,Tₙ of a time-ordered set of timestamp placeholders T₁ <...< Tₙ₊₁ according to their order within the CTRNNW; and
in the rule head the timestamp is replaced by the latest timestamp placeholder Tₙ₊₁ of the time-ordered set of n+1 timestamp placeholders T₁ <...< Tⁿ⁺¹.

10. The method of claim 9,
wherein, according to the predefined scheme, the rule body is given by a logical "AND" connection between edges therein and wherein each relation of the edges therein has been replaced by its inverse;
wherein, within the rule body, the subject of the first edge, being the edge with the earliest timestamp placeholder T₁ of the time-ordered set of placeholders, is a first entity placeholder X₁ which is also the subject of the rule head; wherein the object of the n-th edge, being the edge with the latest timestamp placeholder Tₙ of the time-ordered set of n timestamp placeholders, is an (n+1)-th entity placeholder which is also the object of the rule head; and
wherein in each edge with a timestamp placeholder Tᵢ of the remaining edges, the subject is an i-th entity placeholder which is also the object of the edge with the timestamp placeholder Tᵢ₋₁, and the object is an (i+1)-th entity placeholder which is also the subject of the edge with the timestamp placeholder Tᵢ₊₁.

11. The method of any of claims 8 to 10,
wherein determining (S40) the rule confidence value, RCV, for each rule comprises applying (S41) the rule body of the rule to all fitting subsets of the knowledge graph (10) and calculating (S42), as the rule confidence value, RCV, the number of instances in which the corresponding rule head of the rule fit as well divided by the number of all subsets fitting the rule body.

12. The method of any of claims 8 to 11,
further comprising receiving (S60) a query in which, out of subject, relation, object, and timestamp one is replaced by a query placeholder and the remainder are given; and
providing (S70), based on the generated rules and the knowledge graph (10), at least one possible answer for the query placeholder.

13. The method of any of claims 1 to 12,
further comprising displaying (S80) to a user each of the at least one possible answer together with any of:
- a corresponding rule and rule body on which the corresponding answer is based;
- the corresponding rule confidence value, RCV, of the rule; and
- a query response confidence value, QRCV, indicating a confidence of the response to the query which is at least in part based on the rule confidence value, RCV, of at least one rule on which the query response is based.

14. The method any of claims 1 to 13,
further comprising receiving (S90) new data (71) about the physical system and to generating (S100), based thereon, an addition and/or an amendment to the knowledge graph (10) and/or instructing (S110) the generating (S30) of least one new rule and the determining (S40) of a corresponding rule confidence value, RCV, for each new rule, respectively.

15. A computer program product (300) comprising executable program code (350) configured to perform, when executed, the method according to any of claims 1 to 14.
